# FASCICULE DE BREVET EUROPEEN

(11) **EP 1 420 184 B1**
(45) Date de publication et mention de la délivrance du brevet: **16.03.2005**
(21) Numéro de dépôt: 03292770.9
(22) Date de dépôt: 05.11.2003
(51) Int. Cl.: F16D 23/14

(54) **Butée de débrayage avec élément d'attaque rapporté et procédé de fabrication**
Kupplungsausrücklager mit angesetztem Anschlagsdruckelement und Herstellungsverfahren
Clutch release bearing with dispaced stop element and method of manufacture

(30) Priorité: 14.11.2002 FR 0214259
(43) Date de publication de la demande: 19.05.2004
(73) Titulaire: Aktiebolaget SKF, S-415 50 Göteborg (SE)
(72) Inventeur: Wilson, Pamphile, 91310 Linas (FR); Verger, Frédéric, 92220 Bagneux (FR)
(74) Mandataire: Casalonga, Axel

(56) Documents cités:
- FR-A- 2 539 832
- FR-A- 2 795 790
- US-A- 4 832 166

## Description

La présente invention concerne le domaine des butées de débrayage destinées à agir sur le diaphragme d'un embrayage, en particulier pour un véhicule automobile.

L'invention s'applique aux butées de débrayage comprenant un roulement dont une des bagues est tournante et l'autre bague est fixe.

Entre la bague tournante et la bague fixe sont disposées des billes régulièrement réparties dans le sens circonférentiel au moyen d'une cage, la bague tournante étant munie d'une surface d'attaque sensiblement radiale destinée à venir en contact avec l'extrémité des doigts composant le diaphragme de l'embrayage. Un élément de manoeuvre supporte le roulement et, sous l'action d'un organe de commande (mécanique, électrique ou hydraulique), vient déplacer axialement le roulement de butée contre le diaphragme de l'embrayage pour manoeuvrer ce dernier. Un élément d'autocentrage est généralement interposé entre la bague fixe du roulement et l'élément de manoeuvre, ledit élément d'autocentrage assurant la liaison entre ces deux pièces tout en autorisant, par son élasticité, un déplacement radial relatif entre lesdites deux pièces.

Le roulement vient ainsi actionner l'embrayage par l'intermédiaire de sa bague tournante suivant un diamètre d'action défini par la zone de contact entre diaphragme et bague tournante du roulement de butée, que celle-ci soit massive ou en tôle. Les extrémités des doigts de diaphragme en contact avec la bague tournante de la butée peuvent avoir une forme plane ou bien arrondie et la surface de contact correspondante de la bague tournante peut également être de forme arrondie ou plane. Le roulement de butée peut s'auto-centrer en fonctionnement sur le diaphragme grâce à l'élément d'autocentrage et à un jeu radial existant entre l'organe de manoeuvre et la bague fixe du roulement de butée.

La surface d'attaque d'une butée donnée possède donc un diamètre d'action utile qui lui est spécifique et n'est généralement pas apte à fonctionner avec des embrayages différents les uns des autres, soit de par leur diamètre d'action, soit de par la forme des extrémités de doigts de diaphragme. Il faut donc des bagues tournantes de butée adaptées à chaque série de diamètres d'action d'embrayage et également à la forme des extrémités des doigts de diaphragme. Ceci conduit à une multiplication des variantes de fabrication des butées de débrayage et à une augmentation des coûts de fabrication, de gestion et de stockage.

On connaît par le brevet français n° 73 02 385, (FR-A-2 215 112), une butée de débrayage de type poussée dans laquelle une collerette d'attaque rapportée est emmanchée avec serrage sur une portée cylindrique de la bague intérieure tournante, permettant d'utiliser un même type de roulement de base pour différentes dimensions de diaphragme. Ce système est satisfaisant avec un roulement conventionnel à bague massive possédant des surfaces cylindriques pouvant fournir une portée suffisante pour l'emmanchement de la collerette d'attaque rapportée. Par contre, il ne peut être appliqué de façon fiable à un roulement de butée à bague en tôle du fait de la relative complexité des formes de bague par rapport à un roulement conventionnel et de l'absence de portée satisfaisante pour l'emmanchement de la collerette d'attaque rapportée. Il est très difficile à utiliser avec un roulement à bague massive standard dont les bagues sont de longueur axiale identique et les surfaces frontales radiales coplanaires. Notons enfin que l'emmanchement serré d'une collerette d'attaque rapportée sur une bague de roulement risque de modifier le jeu interne dudit roulement, ce qui peut avoir des conséquences néfastes.

Le document EP-A-0 892 188, qui décrit un dispositif selon le préambule de la revendication 1, propose une butée de débrayage de type poussée avec surface d'attaque rapportée comprenant une collerette d'attaque solidaire de la bague tournante et prévue pour entrer en contact avec le diaphragme et un organe de liaison axialement élastique pourvu de fenêtres coopérant avec des excroissances de la collerette d'attaque formant des crochets. La collerette d'attaque se centre sur la bague tournante du roulement. L'organe de liaison comprend une embase circulaire en forme de rondelle qui vient en appui sur la bague tournante axialement à l'opposé de la collerette d'attaque. Un tel système donne satisfaction pour les roulements de butée à bague en tôle, mais est relativement complexe.

Le document FR-A-2 539 832 décrit une butée de débrayage de type tiré comportant un premier sous-ensemble pour action en tirant sur un élément débrayeur disposé au sein de l'embrayage et un second sous-ensemble pour action d'un organe de commande. Ces sous-ensembles comportent des portées axiales complémentaires de guidage le long desquelles ils sont adaptés à s'emboîter axialement l'un dans l'autre au moins partiellement, l'un des sous-ensembles comportant en outre un organe de couplage élastique adapté à s'effacer élastiquement sous l'action de moyens de rampe prévus sur l'un au moins des sous-ensembles lors de l'emboîtement de ceux-ci mais, en configuration d'emboîtement de ceux-ci, se maintenant élastiquement en affrontement axial en traction contre une portée transversale ménagée sur l'autre sous-ensemble. L'organe de couplage et la portée axiale de guidage ménagée sur le même sous-ensemble font partie d'une même pièce fendue axialement en plusieurs tronçons formant portée axiale de guidage et adaptés à franchir axialement sans déformation ladite portée transversale d'entraînement, ces tronçons étant séparés par des pattes axiales flexibles formant organe de couplage et présentant chacune un épaulement comportant une phase de retenue pour affrontement axial contre la portée transversale d'entraînement. Le premier sous-ensemble comporte deux collerettes sensiblement transversales destinées à se placer axialement de part et d'autre des doigts de diaphragme afin de les pincer, la collerette disposée à l'extérieur de l'embrayage étant élastique. Les collerettes sont maintenues en contact avec les doigts de diaphragme par butée axiale près de leur bord intérieur contre un épaulement transversal ménagé en bout de la pièce à l'opposé de l'organe de couplage et contre la tranche de languettes élastiques formées par crevé vers l'extérieur entre l'épaulement et l'organe de couplage.

Un tel système prévu pour des bagues de roulement à gorge profonde est inadapté au roulement à bagues en tôle et s'avère relativement complexe de par le nombre de pièces et leur forme.

La présente invention vise à remédier aux inconvénients des dispositifs décrits ci-dessus en proposant une butée simple, économique, comportant peu de pièces et pouvant incorporer un roulement à bagues en tôle aussi bien qu'un roulement standard à bagues massives.

Le dispositif de butée de débrayage, selon l'invention, est du type comprenant un palier à roulement muni d'une bague non tournante et d'une bague tournante, et capable d'agir sur un diaphragme de mécanisme d'embrayage.

Le dispositif de butée de débrayage comprend un élément d'attaque solidaire de la bague tournante et prévu pour entrer en contact avec le diaphragme. L'élément d'attaque est en contact avec ladite bague tournante, et solidarisé avec la bague tournante par un anneau de liaison comprenant une portion cylindrique traversant un alésage de la bague tournante et un alésage de l'élément d'attaque, et deux bords sensiblement radiaux dirigés vers l'extérieur en contact axial l'un avec la bague tournante et l'autre avec l'élément d'attaque pour maintenir ensemble la bague tournante et l'élément d'attaque. La surface de l'élément d'attaque en contact avec le diaphragme est disposée du côté de l'élément d'attaque opposé au palier à roulement.

L'élément d'attaque et l'anneau de liaison sont de structure simple et économique et de montage aisé, et peuvent être adaptés sur des bagues tournantes de roulement aussi bien massives que réalisées en tôle emboutie. Un même roulement peut être équipé d'éléments d'attaque de dimensions variées pour coopérer avec des diaphragmes variés, y compris des diaphragmes ayant un diamètre de contact supérieur au diamètre extérieur de la bague extérieure du roulement. En outre l'anneau de liaison qui forme un moyen de fixation ne modifie pas le jeu interne du roulement.

La butée est de type poussé ou tiré, l'élément d'attaque et le palier à roulement étant disposés du même côté du diaphragme.

Avantageusement, l'élément d'attaque est réalisé en tôle emboutie. L'élément d'attaque peut présenter une épaisseur sensiblement constante.

Dans un mode de réalisation de l'invention, l'élément d'attaque présente une forme de rondelle ondulée radialement.

Dans un mode de réalisation de l'invention, l'anneau de liaison est circonférentiellement continu.

Dans un autre mode de réalisation de l'invention, l'anneau de liaison est monobloc et circonférentiellement discontinu. L'anneau de liaison peut présenter une fente lui conférant une élasticité radiale.

Avantageusement, l'anneau de liaison précontraint axialement l'élément d'attaque et la bague tournante. On évite ainsi une rotation néfaste entre ces deux pièces.

Dans un mode de réalisation de l'invention, la bague tournante est en tôle emboutie, sans enlèvement de copeaux.

Dans un autre mode de réalisation de l'invention, la bague tournante est massive, réalisée par usinage. La bague non tournante sera généralement du même type que la bague tournante.

Dans un mode de réalisation de l'invention, la bague tournante est extérieure.

Dans un autre mode de réalisation de l'invention, la bague tournante est intérieure.

L'invention propose également un embrayage comprenant un dispositif tel que ci-dessus. L'embrayage peut comprendre un diaphragme de diamètre de contact avec l'élément d'attaque supérieur au diamètre extérieur de la bague extérieure du roulement. L'élément d'attaque, le palier à roulement et l'élément de manoeuvre sont disposés du même côté du diaphragme.

L'invention propose également un procédé de montage d'une butée de débrayage comprenant un palier à roulement muni d'une bague non tournante et d'une bague tournante. On fixe avec précontrainte sur la bague tournante un élément d'attaque prévu pour entrer en contact avec un diaphragme, au moyen d'un anneau de liaison dont une portion cylindrique traverse un alésage de la bague tournante et un alésage de l'élément d'attaque, et deux bords sensiblement radiaux sont dirigés vers l'extérieur en contact axial l'un avec la bague tournante et l'autre avec l'élément d'attaque. La surface de l'élément d'attaque en contact avec le diaphragme est disposée du côté de l'élément d'attaque opposé au palier à roulement.

Dans un mode de réalisation de l'invention, la fixation est assurée par l'insertion d'une coupelle à section en L dans l'alésage de la bague tournante et l'alésage de l'élément d'attaque et la formation du deuxième rebord à partir de l'extrémité de la portion cylindrique.

Dans un mode de réalisation de l'invention, la formation du deuxième rebord est réalisée par sertissage.

Dans un autre mode de réalisation de l'invention, la formation du deuxième rebord est réalisée par roulage.

Dans un autre mode de réalisation de l'invention, la fixation est assurée par le rétreint radial et l'insertion de l'anneau de liaison dans l'alésage de la bague tournante et l'alésage de l'élément d'attaque, ledit anneau de liaison étant fendu, puis par l'expansion radiale de l'anneau de liaison.

L'élément d'attaque et la bague tournante peuvent être précontraints axialement l'un contre l'autre.

On dispose ainsi d'un roulement de butée de faible poids, de fabrication standardisée et pourvu d'un élément d'attaque permettant l'adaptation d'un même roulement à des types différents de diaphragme d'embrayage.

L'invention sera mieux comprise et d'autres avantages apparaîtront à la lecture de la description détaillée de quelques modes de réalisation pris à titre d'exemples nullement limitatifs et illustrés par les dessins annexés, sur lesquels :
- la figure 1 est une vue de côté en coupe axiale d'une butée d'embrayage selon un aspect de l'invention;
- la figure 2 est une vue de côté en coupe axiale d'un premier mode de réalisation d'anneau de liaison de la figure 1;
- la figure 3 est une vue avant en élévation de l'anneau de liaison de la figure 2;
- la figure 4 est une vue de côté en coupe axiale d'un deuxième mode de réalisation d'anneau de liaison de la figure 1;
- la figure 5 est une vue avant en élévation de l'anneau de liaison de la figure 4;
- les figures 6 à 8 sont des vues partielles en coupe axiale du roulement équipé de l'anneau de liaison des figures 2 et 3 en cours de montage;
- les figures 9 et 10 sont des vues partielles en coupe axiale du roulement équipé de l'anneau de liaison des figures 4 et 5 en cours de montage; et
- la figure 11 est une vue de côté en coupe axiale d'une butée d'embrayage selon un autre aspect de l'invention.

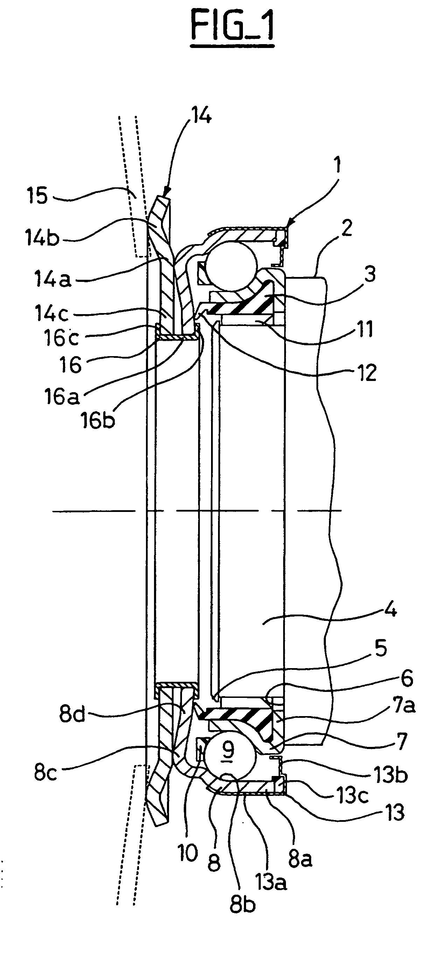

Comme on peut le voir sur la figure 1, la butée de débrayage comprend un palier à roulement 1 monté sur un élément de manoeuvre 2 au moyen d'un organe d'auto-centrage 3. L'élément de manoeuvre 2 comprend une partie tubulaire 4 pourvue à son extrémité libre d'un rebord 5 annulaire en saillie vers l'extérieur et d'une surface radiale 6 formée à l'autre extrémité de la partie tubulaire 4.

Le roulement 1 est monté en contact avec la surface radiale 6 de l'élément de manoeuvre 2. Le roulement 1 comprend une bague intérieure non tournante 7, une bague extérieure tournante 8 réalisée en tôle emboutie, une rangée d'éléments roulants 9 maintenue par une cage 10 et disposée entre les bagues intérieure 7 et extérieure 8. La bague intérieure 7 est pourvue d'une portion radiale 7a dirigée vers l'intérieur qui vient en contact avec la surface radiale 6 de l'élément de manoeuvre 2, de façon que l'élément de manoeuvre 2 puisse pousser le roulement 1 axialement vers le diaphragme 15.

L'organe d'auto-centrage 3 réalisé par exemple en élastomère est disposé dans l'alésage de la bague intérieure 7 et comprend une pluralité de dents 11 flexibles radialement et s'étendant en direction de la partie tubulaire 5 de l'élément de manoeuvre 2. Le roulement 1 peut donc s'auto-centrer par rapport à l'élément de manoeuvre 2 en provoquant le fléchissement des dents 11 de l'organe d'auto-centrage 3. Une lèvre d'étanchéité 12, issue de l'organe d'auto-centrage 3, s'étend axialement vers l'extérieur et vient frotter contre la bague extérieure tournante 8. Un organe d'étanchéité 13 est également prévu à l'autre extrémité du roulement 1. L'organe d'étanchéité 13 comprend un élément en tôle fine dont une portion de fixation 13a entoure une portion tubulaire 8a de la bague tournante 8 et une portion d'étanchéité 13b vient former un passage étroit avec la bague non tournante 7. L'organe d'étanchéité 13 comprend également un élément souple en forme de rondelle 13c disposé entre l'élément en tôle et la bague 8.

La bague extérieure tournante 8 comprend une portion tubulaire 8a adjacente à la piste de roulement 8b prévue pour la rangée d'éléments roulants 9, et en contact avec l'organe d'étanchéité 13. Du côté axialement opposé à l'élément de manoeuvre 2, la bague extérieure 8 comprend une portion arrondie 8c de convexité orientée à l'opposé des éléments roulants et une portion oblique 8d essentiellement radiale s'étendant vers l'intérieur prolongeant la portion arrondie 8c et légèrement vers les éléments roulants dans le sens axial. La portion arrondie 8c est en contact avec un élément d'attaque 14, réalisé en tôle emboutie.

L'élément d'attaque 14, sous forme de rondelle ondulée radialement, comprend une portion bombée 14a convexe du côté de la bague extérieure 8 et s'appliquant au moins en partie contre la portion arrondie 8c de la bague extérieure 8, une portion bombée 14b convexe du côté opposé à la bague extérieure 8, disposée à l'extrémité de grand diamètre de la portion radiale 14a, et formant une surface de contact toroïdale avec les doigts 15 d'un diaphragme d'embrayage, et une extrémité de petit diamètre 14c sensiblement radiale et de diamètre intérieur égal à celui de la portion oblique 8d de la bague 8. La zone de petit diamètre 14c est distante de la portion oblique 8d. La portion arrondie 8c peut pousser axialement l'élément d'attaque 14 vers le diaphragme 15. La surface convexe de la portion bombée 14b est en contact avec le diaphragme 15 du côté opposé à l'élément de manoeuvre 2 et au roulement 1.

Un effort axial de précontrainte appliqué sur la zone de petit diamètre 14c de l'élément d'attaque 14 et/ou sur la portion oblique 8d de la bague extérieure 8 pourra rapprocher très légèrement ladite zone de petit diamètre 14c de ladite portion oblique 8d par déformation axiale élastique de l'élément d'attaque 14 et de la bague extérieure 8.

Le dispositif se complète par un anneau de liaison 16 formant moyen de fixation de l'élément d'attaque 14 sur la bague extérieure 8 et moyen de mise en contact direct de l'élément d'attaque 14 sur la bague extérieure 8. L'anneau de liaison 16 présente une section en U et comprend un fond tubulaire 16a de longueur axiale légèrement supérieure à la somme de l'épaisseur de l'élément d'attaque 14 et de la bague extérieure 8, un bord radial 16c s'étendant vers l'extérieur du côté des éléments roulants et un bord radial 16b s'étendant vers l'extérieur du côté opposé aux éléments roulants. L'extrémité 14c de l'élément d'attaque 14 et l'extrémité de la portion oblique 8d de la bague extérieure 8 sont maintenues entre les bords 16b et 16c avec une certaine précontrainte axiale qui crée un couple de frottement de préférence supérieur au couple de frottement interne du roulement. Sur les figures, on voit que l'extrémité 14c de l'élément d'attaque 14 et l'extrémité de la portion oblique 8d restent distantes malgré la précontrainte. On pourrait toutefois prévoir des pièces dans lesquelles les portions 14c et 8d sont initialement encore plus proches axialement l'une de l'autre lors de la mise en contact de l'élément d'attaque 14 et de la bague extérieure 8, la mise en précontrainte axiale pouvant provoquer alors le contact entre la portion 14c et la portion 8d.

L'élément d'attaque 14 et la bague extérieure 8 sont ainsi solidaires en rotation. L'extrémité 14c de l'élément d'attaque 14 et l'extrémité de la portion oblique 8d de la bague extérieure 8 peuvent être en contact avec le fond tubulaire 16a pour un bon centrage de l'anneau de liaison 16. L'anneau de liaison 16 est une pièce simple, de faible masse et de fabrication économique. La précontrainte axiale exercée par l'anneau de liaison 16 sur la bague extérieure 8 et l'élément d'attaque 14 permet une solidarisation de ces deux pièces, un montage simple et aisé à automatiser, une liaison rigide et à prise de jeu négligeable, et l'utilisation d'un élément d'attaque en tôle.

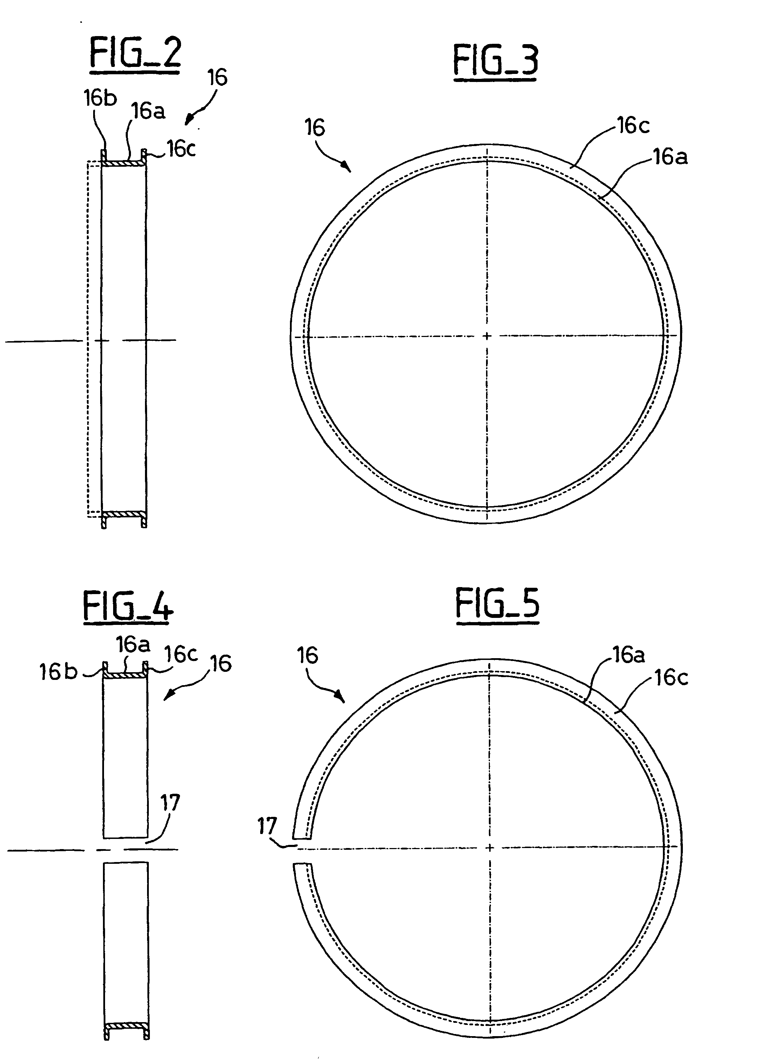

Sur les figures 2 et 3 est illustrée la mise en forme d'un anneau de liaison 16 circonférentiellement continu. À une étape intermédiaire de fabrication représentée en trait mixte, l'anneau de liaison 16 se présente sous la forme d'une coupelle à section en L, le bord 16b n'étant pas encore formé et s'étendant axialement. Le bord 16b est ensuite roulé ou serti pour lui conférer sa forme radiale définitive après le montage sur le roulement.

Sur les figures 4 et 5 est illustré un anneau de liaison 16 circonférentiellement discontinu. L'anneau de liaison 16 comprend une fente 17 formée sur un court secteur angulaire, qui lui confère une certaine élasticité radiale en vue du montage. L'anneau de liaison 16 est fabriqué sous sa forme définitive avant le montage sur le roulement.

Bien entendu, l'anneau de liaison 16 peut présenter des variantes telles que des bords 16b ou 16c obliques, un fond 16a tronconique, des portions supplémentaires, etc.

Pour monter l'élément d'attaque 14 sur le roulement de butée, on dispose l'élément d'attaque 14 et la bague extérieure 8 à faible distance l'un de l'autre axialement.

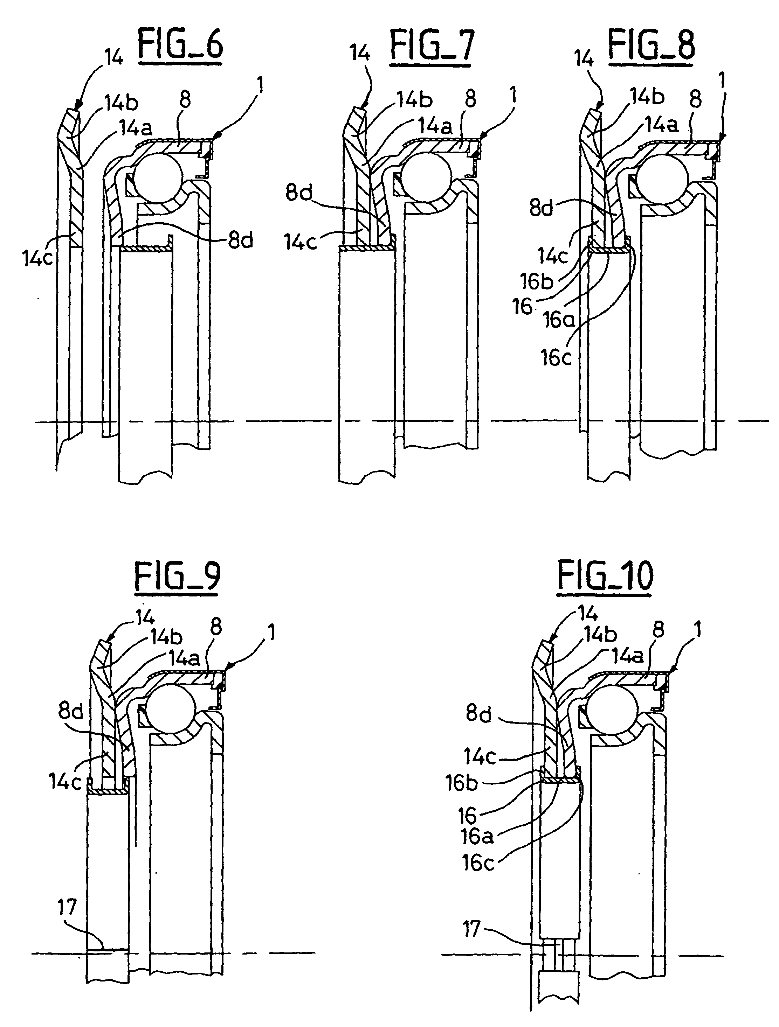

Pour des raisons de clarté du dessin, l'organe d'auto-centrage 3 a été omis sur les figures 6 à 10.

Sur les figures 6 à 8, est illustré le montage avec un anneau de liaison 16 conforme aux figures 2 et 3. On amène l'anneau de liaison 16 sous la forme d'une coupelle à section en L dans l'alésage de la bague extérieure 8, confer figure 6. On fait passer le fond tubulaire 16a dans l'alésage de la portion oblique 8d de la bague extérieure 8, jusqu'au contact entre le bord 16c et ladite portion oblique 8d. Simultanément ou non, on rapproche axialement l'élément d'attaque 14 de la portion oblique 8d de la bague extérieure 8 jusqu'au contact, confer figure 7. Le fond tubulaire 16a passe dans l'alésage de l'extrémité 14c de l'élément d'attaque 14.

Puis, on forme le bord 16b de l'anneau de liaison 16 par déformation plastique de l'extrémité du fond tubulaire 16a, notamment par roulage ou sertissage, confer figure 8, l'élément d'attaque 14 et la bague extérieure 8 étant précontraints axialement l'un contre l'autre durant cette opération, de telle sorte qu'il subsiste après l'opération de sertissage ou de roulage une précontrainte axiale résiduelle maintenant fermement les deux pièces en contact.

Sur les figures 9 et 10, est illustré le montage avec un anneau de liaison 16 conforme aux figures 4 et 5. On rapproche axialement l'élément d'attaque 14 de la portion oblique 8d de la bague extérieure 8 jusqu'au contact, confer figure 9. On serre radialement l'anneau de liaison 16 pour diminuer son diamètre extérieur en diminuant la largeur de la fente 17.

On fait passer l'anneau de liaison 16 dans l'alésage de la portion oblique 8d de la bague extérieure 8 et dans l'alésage de l'extrémité 14c de l'élément d'attaque 14. Puis on relâche l'anneau de liaison 16 qui reprend sensiblement son diamètre à l'état libre avec contact entre le bord 16c et ladite portion oblique 8d et entre le bord 16b et l'extrémité 14c de l'élément d'attaque 14. Eventuellement, on serre axialement la portion oblique 8d de la bague extérieure 8 et l'extrémité 14c de l'élément d'attaque 14 pour faciliter le relâchement de l'anneau de liaison 16 et le déplacement relatif des bords 16b et 16c par rapport à la portion oblique 8d de la bague extérieure 8 et à l'extrémité 14c de l'élément d'attaque 14. La fente 17 reprend sensiblement sa largeur d'avant montage.

Dans les deux modes de réalisation, la distance entre les bords 16b et 16c est avantageusement légèrement inférieure à la distance entre la face de la portion oblique 8d de la bague extérieure 8 du côté des éléments roulants 9 et la face de l'alésage de l'extrémité 14c de l'élément d'attaque 14 du côté opposé aux éléments roulants 9 afin de maintenir après montage une légère précontrainte axiale résiduelle de la portion oblique 8d de la bague extérieure 8 et de l'élément d'attaque 14 suffisante pour les maintenir solidaires en rotation en conditions normales.

L'élément d'attaque 14 peut être fabriqué de façon très économique à partir d'un feuillard d'acier, par découpe, emboutissage et pliage, ledit élément d'attaque une fois formé subissant un traitement thermique de durcissement limitant son usure due au contact avec les doigts 15 du diaphragme d'embrayage.

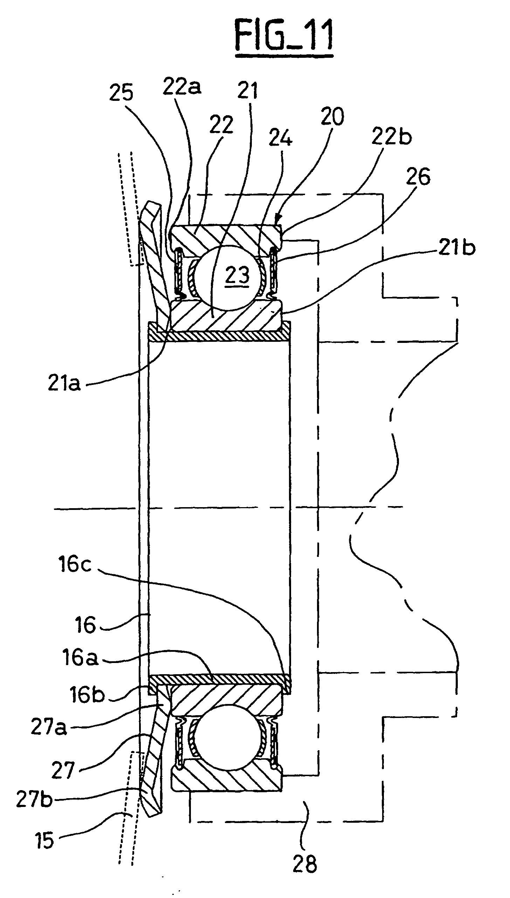

Sur la figure 11, est illustré un mode de réalisation de l'invention adapté à un roulement conventionnel standard à bagues massives. Le roulement 20 comprend une bague intérieure tournante 21, une bague extérieure non tournante 22, une rangée d'éléments roulants 23, ici des billes, disposés entre des chemins de roulement formés sur les bagues intérieure 21 et extérieure 22 et maintenus par une cage 24, et des éléments d'étanchéité 25 et 26 montés de part et d'autre des éléments roulants 23 et obturant l'espace entre les bagues intérieure 21 et extérieure 22. Les éléments d'étanchéité 25 et 26 sont identiques.

Les bagues intérieure 21 et extérieure 22 sont de type massives et comportent un chemin de roulement formant une concavité par rapport, respectivement, à la surface extérieure et la surface intérieure des bagues intérieure 21 et extérieure 22. La bague extérieure 22 comprend des surfaces frontales radiales 22a et 22b, coplanaires avec les surfaces frontales radiales 21a et 21b correspondantes de la bague intérieure 21.

On entendra par bagues massives des bagues qui ne sont pas obtenues à partir d'une tôle de métal mais à partir d'ébauches annulaires forgées, laminées ou tournées, les formes et dimensions finales étant obtenues par des procédés d'usinage avec enlèvement de copeaux.

L'élément d'attaque 27, sous forme de rondelle ondulée radialement, comprend une portion bombée 27a de petit diamètre convexe du côté de la bague intérieure 21 et s'appliquant au moins en partie contre la surface frontale radiale 21a de la bague intérieure 21, et une portion bombée 27b de grand diamètre convexe du côté opposé à la bague intérieure 21 et formant une surface de contact toroïdale avec les doigts 15 d'un diaphragme d'embrayage.

Un anneau de liaison 16 est monté dans l'alésage de la bague intérieure 21 et dans l'alésage de l'élément d'attaque 27. Le bord 16c de l'anneau de liaison 16 est en contact avec la surface frontale radiale 21b de la bague intérieure 21 et le bord 16b est en contact avec l'élément d'attaque 27 à proximité de son alésage du côté du diaphragme 15.

Le roulement 20 est monté par sa bague extérieure 22 dans un logement 28 représenté en trait mixte.

Dans ces différents modes de réalisation, l'élément d'attaque rapporté permet, de façon très économique, d'équiper une butée en tôle existante afin de pouvoir l'utiliser avec un diamètre de diaphragme pour laquelle elle n'avait pas été prévue initialement, évitant ainsi le développement et la fabrication d'un nouveau roulement sur mesure.

L'élément d'attaque rapporté permet également de transformer extrêmement rapidement un roulement conventionnel standard à bagues massives, fabriqué en série, en un roulement de butée de débrayage spécifique et adapté à un diamètre particulier de diaphragme.

L'élément d'attaque rapporté est économique à fabriquer, facile à mettre en place par un simple mouvement axial et ne modifie pas le jeu interne initial du roulement. En effet, l'élément d'attaque et l'anneau de liaison coopèrent avec la bague tournante sans exercer de contrainte qui risquerait de déformer ladite bague dans le sens radial et donc de modifier le jeu interne du roulement.

## Revendications

1. Dispositif de butée de débrayage, du type comprenant un palier à roulement (1) muni d'une bague non tournante (7) et d'une bague tournante (8), ledit dispositif étant capable d'agir sur un diaphragme (15) de mécanisme d'embrayage, et comprenant un élément d'attaque (14) solidaire et en contact avec la bague tournante et prévu pour entrer en contact avec le diaphragme, la surface de l'élément d'attaque prévue pour contact avec le diaphragme étant disposée du côté opposé au palier à roulement **caractérisé par le fait que** l'élément d'attaque est solidarisé avec la bague tournante au moyen d'un anneau de liaison (16) comprenant une portion cylindrique (16a) traversant un alésage de la bague tournante et un alésage de l'élément d'attaque, et deux bords (16b, 16c) sensiblement radiaux dirigés vers l'extérieur en contact axial l'un avec la bague tournante et l'autre avec l'élément d'attaque pour maintenir ensemble la bague tournante et l'élément d'attaque.

2. Dispositif selon la revendication 1, **caractérisé par le fait que** l'élément d'attaque est réalisé en tôle emboutie.

3. Dispositif selon la revendication 1 ou 2, **caractérisé par le fait que** l'élément d'attaque présente une forme de rondelle ondulée radialement.

4. Dispositif selon l'une quelconque des revendications précédentes, **caractérisé par le fait que** l'anneau de liaison est circonférentiellement continu.

5. Dispositif selon l'une quelconque des revendications 1 à 3, **caractérisé par le fait que** l'anneau de liaison est monobloc et circonférentiellement discontinu.

6. Dispositif selon l'une quelconque des revendications précédentes, **caractérisé par le fait que** l'anneau de liaison précontraint axialement l'élément d'attaque et la bague tournante.

7. Dispositif selon l'une quelconque des revendications précédentes, **caractérisé par le fait que** la bague tournante (8) est en tôle emboutie.

8. Dispositif selon l'une quelconque des revendications précédentes, **caractérisé par le fait que** la bague tournante est extérieure.

9. Dispositif selon l'une quelconque des revendications 1 à 7, **caractérisé par le fait que** la bague tournante est intérieure.

10. Embrayage comprenant un dispositif selon l'une quelconque des revendications précédentes et un diaphragme de diamètre de contact avec l'élément d'attaque supérieur au diamètre extérieur de la bague extérieure du roulement.

11. Procédé de montage d'une butée de débrayage comprenant un palier à roulement (1) muni d'une bague non tournante (7) et d'une bague tournante (8), dans lequel on fixe avec précontrainte sur la bague tournante un élément d'attaque prévu pour entrer en contact avec un diaphragme, au moyen d'un anneau de liaison dont une portion cylindrique traverse un alésage de la bague tournante et un alésage de l'élément d'attaque, et deux bords sensiblement radiaux sont dirigés vers l'extérieur en contact axial l'un avec la bague tournante et l'autre avec l'élément d'attaque, la surface de l'élément d'attaque prévue pour contact avec le diaphragme étant disposée du côté opposé au palier à roulement.

12. Procédé selon la revendication 11, dans lequel la fixation est assurée par l'insertion d'une coupelle à section en L dans l'alésage de la bague tournante et l'alésage de l'élément d'attaque et la formation du deuxième rebord à partir de l'extrémité de la portion cylindrique.

13. Procédé selon la revendication 12, dans lequel la formation du deuxième rebord est réalisée par sertissage.

14. Procédé selon la revendication 12, dans lequel la formation du deuxième rebord est réalisée par roulage.

15. Procédé selon la revendication 11, dans lequel la fixation est assurée par le rétreint radial et l'insertion de l'anneau de liaison dans l'alésage de la bague tournante et l'alésage de l'élément d'attaque, ledit anneau de liaison étant fendu, puis par l'expansion radiale de l'anneau de liaison.

16. Procédé selon l'une quelconque des revendications 11-15, dans lequel l'élément d'attaque (14) et la bague tournante (8) sont précontraints axialement l'un contre l'autre.

## Claims

1. Clutch release bearing device, of the type comprising a rolling bearing (1) furnished with a non-rotating bush (7) and a rotating bush (8), the said device being capable of acting on a clutch mechanism diaphragm (15), and comprising an engagement element (14) secured to and in contact with the rotating bush and designed to enter into contact with the diaphragm, the surface of the engagement element designed for contact with the diaphragm being disposed on the opposite side to the rolling bearing, **characterized in that** the engagement element is secured to the rotating bush by means of a connecting ring (16) comprising a cylindrical portion (16a) passing through a bore of the rotating bush and a bore of the engagement element, and two substantially radial edges (16b, 16c) directed outwards in axial contact, one with the rotating bush and the other with the engagement element to keep the rotating bush and the engagement element together.

2. Device according to Claim 1, **characterized in that** the engagement element is made of pressed sheet metal.

3. Device according to Claim 1 or Claim 2, **characterized in that** the engagement element has the shape of a washer with radial corrugations.

4. Device according to any one of the preceding claims, **characterized in that** the connecting ring is circumferentially continuous.

5. Device according to any one of Claims 1 to 3, **characterized in that** the connecting ring is a solid block and is circumferentially discontinuous.

6. Device according to any one of the preceding claims, **characterized in that** the connecting ring axially prestresses the engagement element and the rotating bush.

7. Device according to any one of the preceding claims, **characterized in that** the rotating bush (8) is made of pressed sheet metal.

8. Device according to any one of the preceding claims, **characterized in that** the rotating bush is external.

9. Device according to any one of Claims 1 to 7, **characterized in that** the rotating bush is internal.

10. Clutch comprising a device according to any one of the preceding claims and a diaphragm with a diameter of contact with the engagement element greater than the outer diameter of the outer bush of the bearing.

11. Method of assembling a clutch release bearing comprising a rolling bearing (1) furnished with a non-rotating bush (7) and a rotating bush (8), in which is attached with prestress on the rotating bush an engagement element designed to enter into contact with a diaphragm, by means of a connecting ring, a cylindrical portion of which passes through a bore of the rotating bush and a bore of the engagement element, and two substantially radial edges are directed outwards in axial contact, one with the rotating bush and the other with the engagement element, the surface of the engagement element designed for contact with the diaphragm being placed on the opposite side to the rolling bearing.

12. Method according to Claim 11, in which the attachment is provided by the insertion of an L-section collar into the bore of the rotating bush and the bore of the engagement element and the shaping of the second rim based on the end of the cylindrical portion.

13. Method according to Claim 12, in which the shaping of the second rim is achieved by crimping.

14. Method according to Claim 12, in which the shaping of the second rim is achieved by rolling.

15. Method according to Claim 11, in which the attachment is achieved by the radial shrinking and the insertion of the connecting ring into the bore of the rotating bush and the bore of the engagement element, the said connecting ring being split, then by the radial expansion of the connecting ring.

16. Method according to any one of Claims 11 to 15, in which the engagement element (14) and the rotating bush (8) are prestressed axially one against the other.

## Patentansprüche

1. Kupplungsausrücklagervorrichtung, von der Bauart, zu der ein Wälzlager (1) mit einem stillstehenden Ring (7) und einem umlaufenden Ring (8) gehören, wobei die Vorrichtung in der Lage ist auf eine Membranfeder (15) einer Kupplungsvorrichtung einzuwirken und ein mit dem umlaufenden Ring starr verbundenes und mit diesem in Berührung stehendes Eingriffselement (14) aufweist, das dazu vorgesehen ist, mit der Membranfeder in Berührung zu kommen, wobei die für den Kontakt mit der Membranfeder vorgesehene Fläche des Eingriffselements auf der dem Wälzlager abgewandten Seite angeordnet ist, **dadurch gekennzeichnet, dass** das Eingriffselement an dem umlaufenden Ring mittels eines Verbindungsrings (16) starr befestigt ist, der einen zylindrischen Abschnitt (16a), der sich durch einen zylindrischen Innenraum des umlaufenden Rings und einen zylindrischen Innenraum des Eingriffselements erstreckt, und zwei im Wesentlichen radiale, nach außen gerichtete Borde (16b, 16c) aufweist, von denen der eine mit dem umlaufenden Ring und der andere mit dem Eingriffselement axial in Berührung stehen, um den umlaufenden Ring und das Eingriffselement zusammen zu halten.

2. Vorrichtung nach Anspruch 1, **dadurch gekennzeichnet, dass** das Eingriffselement als Blechstanz- und -biegeteil gefertigt ist.

3. Vorrichtung nach Anspruch 1 oder 2, **dadurch gekennzeichnet, dass** das Eingriffselement die Gestalt einer radial gewellten Scheibe aufweist.

4. Vorrichtung nach einem der vorhergehenden Ansprüche, **dadurch gekennzeichnet, dass** der Verbindungsring um den Umfang herum nicht unterbrochen ist.

5. Vorrichtung nach einem der Ansprüche 1 bis 3, **dadurch gekennzeichnet, dass** der Verbindungsring einstückig hergestellt ist und am Umfang einen Stoß aufweist.

6. Vorrichtung nach einem der vorhergehenden Ansprüche, **dadurch gekennzeichnet, dass** der Verbindungsring das Eingriffselement und den umlaufenden Ring axial vorspannt.

7. Vorrichtung nach einem der vorhergehenden Ansprüche, **dadurch gekennzeichnet, dass** der umlaufende Ring (8) als Blechstanz- und -biegeteil gefertigt ist.

8. Vorrichtung nach einem der vorhergehenden Ansprüche, **dadurch gekennzeichnet, dass** der umlaufende Ring der äußere Ring ist.

9. Vorrichtung nach einem der Ansprüche 1 bis 7, **dadurch gekennzeichnet, dass** der umlaufende Ring der innere Ring ist.

10. Kupplung, zu der eine Vorrichtung nach einem der vorhergehenden Ansprüche und eine Membranfeder gehören, die einen mit dem Eingriffselement in Berührung befindlichen Durchmesser aufweist, der größer ist als der Außendurchmesser des Außenrings des Wälzlagers.

11. Verfahren zum Zusammenbau eines Kupplungsausrücklagers, das ein einen stillstehenden Ring (7) und einen umlaufenden Ring (8) enthaltendes Wälzlager (1) aufweist, bei dem an dem umlaufenden Ring unter Vorspannung ein Eingriffselement angebracht wird, das dazu vorgesehen ist, um mit einer Membranfeder über einen Verbindungsring in Berührung zu kommen, der einen sich durch eine Bohrung des umlaufenden Rings und einen zylindrischen Innenraum des Eingriffselements erstreckenden zylindrischen Abschnitt aufweist, und zwei im Wesentlichen radiale Borde nach außen gerichtet sind, von denen der eine mit dem umlaufenden Ring und der andere mit dem Eingriffselement in axialer Berührung stehen, wobei die Fläche des Eingriffselements, die für den Kontakt mit der Membranfeder vorgesehen ist, auf der dem Wälzlager abgewandten Seite angeordnet ist.

12. Verfahren nach Anspruch 11, bei dem die Befestigung sichergestellt wird, indem ein Teller mit einem L-förmigen Querschnitt in den zylindrischen Innenraum des umlaufenden Rings und den zylindrischen Innenraum des Eingriffselements einfügt wird und der zweite Bord von dem Ende des zylindrischen Abschnitts ausgehend angeformt wird.

13. Verfahren nach Anspruch 12, bei dem das Formen des zweiten Bords durch Bördeln erfolgt.

14. Verfahren nach Anspruch 12, bei dem das Formen des zweiten Bördelrands durch Walzen erfolgt.

15. Verfahren nach Anspruch 11, bei dem die Befestigung durch das radiale Nachgeben des Verbindungsrings und dessen Einfügen in den zylindrischen Innenraum des umlaufenden Rings und den zylindrischen Innenraum des Eingriffselements, wobei der Verbindungsring gespalten ist, anschließend durch das radiale Ausdehnen des Verbindungsrings sichergestellt wird.

16. Vorrichtung nach einem der Ansprüche 11 bis 15, bei dem das Eingriffselement (14) und der umlaufende Ring (8) in axialer Richtung gegeneinander vorgespannt sind.
